# EUROPÄISCHE PATENTSCHRIFT

(11) **EP 1 599 378 B1**
(45) Veröffentlichungstag und Bekanntmachung des Hinweises auf die Patenterteilung: **08.07.2009**
(21) Anmeldenummer: 04717047.7
(22) Anmeldetag: 04.03.2004
(51) Int. Cl.: B62D 65/00, B23P 19/00, B23K 37/04

(54) **FÜGEEINRICHTUNG UND FÜGEVERFAHREN**
JOINING DEVICE AND JOINING METHOD
DISPOSITIF ET PROCEDE D'ASSEMBLAGE

(30) Priorität: 06.03.2003 DE 10310194
(43) Veröffentlichungstag der Anmeldung: 30.11.2005
(73) Patentinhaber: KUKA Systems GmbH, 86165 Augsburg (DE); Ford-Werke GmbH, 50735 Köln (DE)
(72) Erfinder: STURM, Thomas, 85259 Wiedenzhausen (DE); LIEPERT, Konrad, 86415 Mering (DE); REHSE, Michael, 57462 Olpe (DE); KÜHN, Gerald, 50259 Pulheim (DE)
(74) Vertreter: Ernicke, Hans-Dieter
(86) Internationale Anmeldenummer: PCT/EP2004/002151
(87) Internationale Veröffentlichungsnummer: WO 2004/078565

(56) Entgegenhaltungen:
- WO-A1-20/04067363
- DE-A- 10 061 309
- DE-A- 10 133 956
- US-A- 4 997 509
- US-B1- 6 220 502

## Beschreibung

Die Erfindung betrifft eine Fügeeinrichtung und ein Fügeverfahren für Fügeteile, insbesondere Dachbleche, mit den Merkmalen im Oberbegriff des Verfahrens- und Vorrichtungshauptanspruchs.

Eine solche Fügeeinrichtung nebst Fügeverfahren sind aus der DE-A-100 61 309 bekannt. Die Technik dient zum Fügen von Dachblechen an Seitenwänden von Fahrzeugkarosserien mittels eines Fügegreifers. Der Fügegreifer besteht aus einem robotergeführten Rahmen mit mehreren Sauggreifern und peripher angeordneten und auf das Fügeteil einwirkenden Andruckschläuchen. Mit diesen Andruckschläuchen sollen die längslaufenden Ränder des Dachblechs gegen die Auflagen an den Seitenwänden angedrückt werden, wobei eine bleibende Verformung oder Beschädigung an dem Dachteil vermieden werden soll. Der über die gesamte Dachblechlänge sich erstreckende Druckschlauch sorgt für einen überall gleich bleibenden Druck, was zwar der Verformungsvermeidung entgegenkommt, andererseits aber keine sichere Anlage des Dachblechs an den Auflagen der Seitenwände garantiert. Nachdem das Dachblech durch Laserlöten mit den Seitenwänden verbunden wird, kann diese unzureichende Anpressung durch Spaltbildung zu Problemen führen, insbesondere wenn die Seitenteile der Karosserie Lagetoleranzen aufweisen und z.B. mit ihren Auflagen windschief zueinander ausgerichtet sind. Die Lötverbindung kann in diesem Fall unzureichend sein.

Es ist Aufgabe der vorliegenden Erfindung, eine bessere Fügetechnik aufzuzeigen.

Die Erfindung löst diese Aufgabe mit den Merkmalen im Verfahrens- und Vorrichtungshauptanspruch.
Der Fügegreifer mit der beanspruchten Ausgestaltung der Andrückleiste hat den Vorteil, dass das Fügeteil, z.B. ein Dachblech, wesentlich besser und passgenauer an ein oder mehrere Bauteile, z.B. Seitenwände von Fahrzeugkarosserien, angelegt werden kann. Hierbei können bleibende Verformungen des Fügeteils in Kauf genommen werden, zumal sie an der fertig lackierten Karosserie nicht sichtbar sind. Durch die an die Fügekontur angepasste Andrückleiste ist eine sichere und spaltgenaue Anlage entlang der gesamten Fügekontur möglich, wobei alle etwaigen Lage- und Formtoleranzen der Bauteile aufgenommen werden können. Die genaue Fügeteilanlage sorgt außerdem für eine bessere Fixierung, z.B. durch Laserlöten, Laserschweißen, Kleben oder dergleichen.

Die Unterteilung der Andrückleiste in mehrere Leistensegmente hat den Vorteil einer besseren und genaueren Formanpassung an die vorhandene Fügekontur der Bauteile. Zudem können lokale Toleranzen besser und zuverlässiger aufgenommen werden. Hierfür ist eine gegenseitige unabhängige, nachgiebige Lagerung der Leistensegmente von Vorteil. Über entsprechende Federelemente ist hierbei die Anpresskraft der einzelnen Leistensegmente gewährleistet. Im Gegensatz zum vorbekannten Andrückschlauch kann über die Formstabilität der Andrückleiste und ihrer Leistensegmente die Anpresskraft und die hierbei einwirkende Formgebung gezielt an den benötigten und toleranzbehafteten Stellen der Fügekontur zum Einsatz gebracht werden.

Die erfindungsgemäße Fügeeinrichtung ermöglicht es ferner, das Fügeteil, z.B. ein Dachblech, nicht nur lose auf die Bauteile, insbesondere Karosserieseitenwände, aufzulegen und anzupressen sondern auch eine formschlüssige Verbindung, z.B. eine Schnappverbindung, zu schaffen.

Hierfür können unterschiedlich steuerbare Greifelemente, vorzugsweise Sauggreifer, im Innenbereich und an der Peripherie des Fügegreifers vorhanden sein, die eine Überwölbung des Fügeteils und damit eine Verschmälerung seiner Kontur für die Positionierung an der Verbindungsstelle erlauben. Bei anschließender Rückbildung der Wölbung schnappt das Fügeteil von selbst in eine entsprechende konkave Aufnahme an den Bauteilen ein. Eine bewusste Wölbung des Dachblechs kann auch anderen Zwecken dienen, z.B. einer bewusst schrägen Anstellung der Fügeteilränder an den Bauteilen.

Die erfindungsgemäße Fügeeinrichtung ermöglicht es ferner, die Fügeteile passgenau zu greifen und für die anschließende Fixierung oder Dauerverbindung exakt zu positionieren bzw. zu zentrieren. Hierfür sind entsprechende Einweiser und eine am Bauteil, insbesondere an dessen Fügekontur sich orientierende Zentriervorrichtung von Vorteil.

Die erfindungsgemäße Fügetechnik hat vor allem auch den Vorteil einer hohen Flexibilität und Anpassung an die gewünschte Toleranzvorgaben. Das Fügeteil kann wahlweise im Netzbezug oder im Bauteilbezug gefügt werden. Der Bauteilbezug orientiert sich an der vorhandenen Position und Ausrichtung der Bauteile, auch wenn diese fehlerhaft und nicht im Netzbezug sein sollte. Bei dieser Fügetechnik treten die geringsten Verformungen und Spannungen auf. Die erfindungsgemäße Fügetechnik ist daher hoch flexibel und lässt sich an die jeweiligen Vorgaben und Erfordernisse des Herstellers und Betreibers anpassen.

In den Unteransprüchen sind vorteilhafte Ausgestaltungen der Erfindung angegeben.

Die Erfindung ist in den Zeichnungen beispielsweise und schematisch dargestellt. Im einzelnen zeigen:
- Figur 1:: einen Fügegreifer in perspektivischer Darstellung,
- Figur 2 bis 4:: eine perspektivische Darstellung der Einzelkomponenten des Fügegreifers von Figur 1,
- Figur 5:: eine Fügeeinrichtung in einer Bearbeitungsstation in Seitenansicht,
- Figur 6:: eine Rückansicht gemäß Pfeil VI von Figur 5,
- Figur 7:: eine Draufsicht gemäß Pfeil VII von Figur 5,
- Figur 8:: eine vergrößerte Seitenansicht eines Fügegreifers in Fügestellung an einer Fahrzeugkarosserie,
- Figur 9:: einen Querschnitt durch eine Andrückleiste des Fügegreifers von Figur 8,
- Figur 10: a-f: einen Fügeablauf in sechs Schritten,
- Figur 11:: eine Seitenansicht einer Variante der Bearbeitungsstation von Figur 5 mit einer anderen Zustellvorrichtung für den Fügegreifer,
- Figur 12: a-e: eine Variante der Fügefolge von Figur 10a-f in fünf Schritten,
- Figur 13 bis 20:: verschiedene Ausgestaltungen von Fügeteil und Bauteil an der Verbindungs- und Fügestelle,
- Figur 21:: eine Draufsicht auf ein Fügeteil mit mehreren Zentrierstellen,
- Figur 22:: eine Zentriervorrichtung für das Fügeteil mit mehreren Zentriereinheiten in Stirnansicht und
- Figur 23 bis 25:: eine Zentriereinheit in mehreren Betriebsstellungen beim Zentriervorgang.

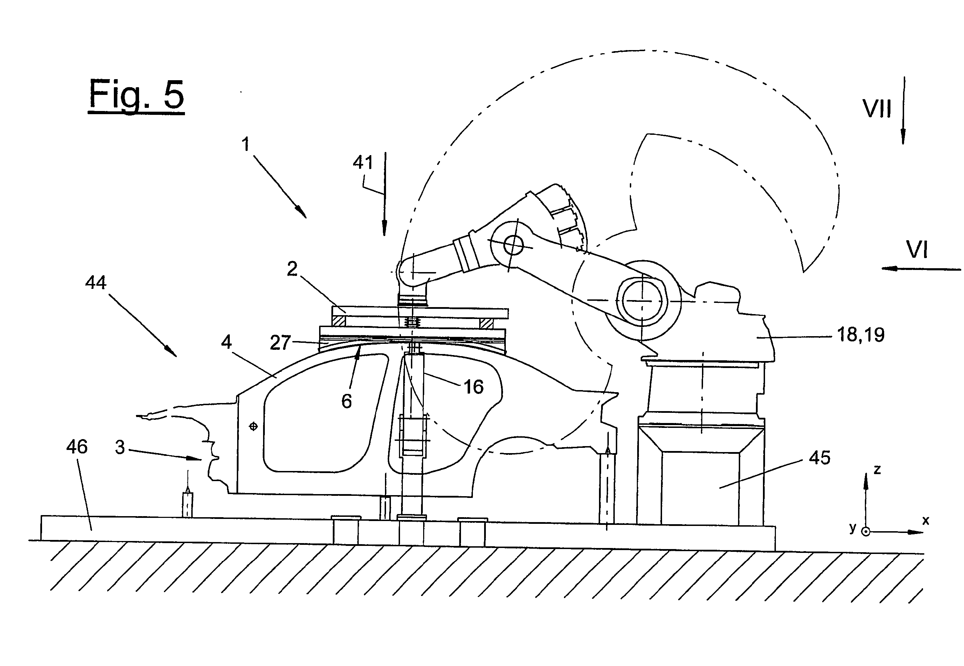

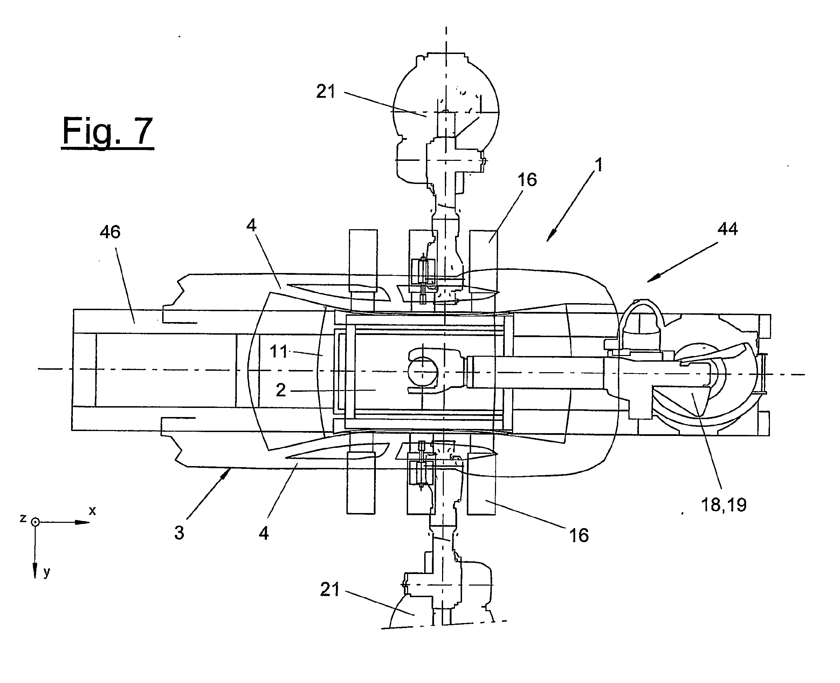

Figur 5 bis 7 und 11 zeigen eine Bearbeitungsstation (44) mit einer Fügeeinrichtung (1) in verschiedenen Ausführungsformen. Die Bearbeitungsstation (44) ist Bestandteil einer Fertigungsanlage für Karosserien (3) oder Aufbauten von Fahrzeugen und kann mehrfach vorhanden und hierbei in eine Transferlinie integriert sein. Die Karosserie (3) besteht z.B. aus einer Bodengruppe (nicht dargestellt) und ein oder mehreren Bauteilen (4), hier zwei Seitenwandteilen, die ggf. im Dachbereich durch eingelegte Dachspriegel (nicht dargestellt) miteinander verbunden und versteift sind. Die Karosserie wird von einer Bauteilaufnahme (46), z.B. einer Palette gehalten und entlang der Transferlinie transportiert.

Mit der Fügeeinrichtung (1) wird ein Fügeteil (11), welches z.B. aus einem dünnwandigen und ggf. vorgeformten Dachblech besteht, auf der Karosserie (4) bzw. den Seitenwandteilen (4) gefügt. Hierbei wird es an die Fügestelle zugeführt, dort in einer fügegerechten Lage positioniert, in dieser Lage festgehalten und anschließend durch Schweißen, Löten oder eine andere Verbindungstechnik befestigt. Die Fügeeinrichtung (1) bewirkt zumindest die Schritte des fügegerechten Positionierens und Haltens. Sie kann darüber hinaus auch das Zuführen erledigen. Die Verbindungstechnik kann separat angeordnet und durchgeführt werden. Sie kann aber auch mit der Fügeeinrichtung (1) verbunden sein.

Auf gleiche oder ähnliche Weise können auch andere Fügeteile, z.B. Seitenbleche oder dergleichen, an die Karosserie (3) und deren Bauteile (4) gefügt werden. Ferner können in entsprechender Weise Beplankungen und andere Fügeteile an Aufbauten, z.B. Kastenaufbauten, von Fahrzeugen gefügt werden.

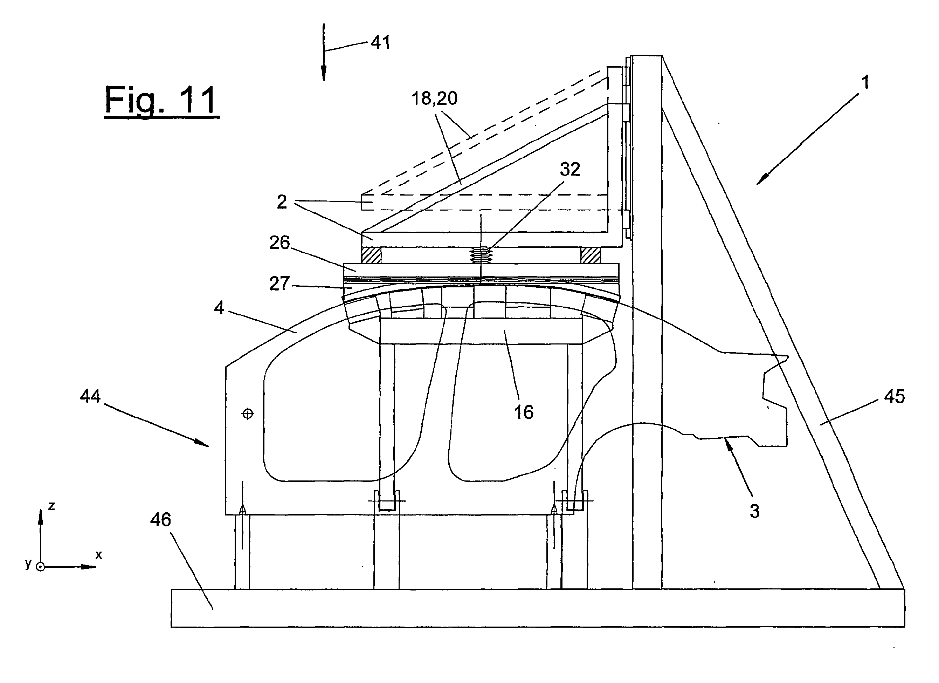

Die Fügeeinrichtung (1) beinhaltet in den verschiedenen Ausführungsbeispielen jeweils einen Fügegreifer (2), der von einer Zuführeinrichtung (18) bewegt und betätigt wird. Der Fügegreifer (2) kann auch mehrfach vorhanden sein. In der Variante von Figur 5 bis 7 besteht die Zuführeinrichtung (18) aus einem mehrachsigen Roboter (19), vorzugsweise einem sechsachsigen Gelenkarmroboter, der am Stationsgestell (45), z.B. auf einem bodenseitigen Sockel, montiert ist. Alternativ kann es sich auch um einen Portalroboter handeln. In der Variante von Figur 11 ist die Zuführeinrichtung (18) als Zuführschlitten (20) ausgebildet, der an einer Trageinrichtung, z.B. dem Stationsgestell (45) in Fügerichtung oder Zustellrichtung (41) geführt und beweglich gelagert ist. Im gezeigten Ausführungsbeispiel fällt die Zustelleinrichtung (41) mit der z-Achse zusammen. In der x- und y-Achse hat der Zuführschlitten (20) keine Freiheitsgrade.

Zum Fügen kann das Fügeteil (11), welches nachfolgend der Einfachheit halber als Dachblech angesprochen wird, bereits in einer vorhergehenden Arbeitsstation auf der Karosserie (3) aufgelegt sein. Alternativ kann das Dachblech (11) auch vom Fügegreifer (2) zugeführt werden, der hierfür in geeigneter Weise vor dem Fügevorgang beladen wird.

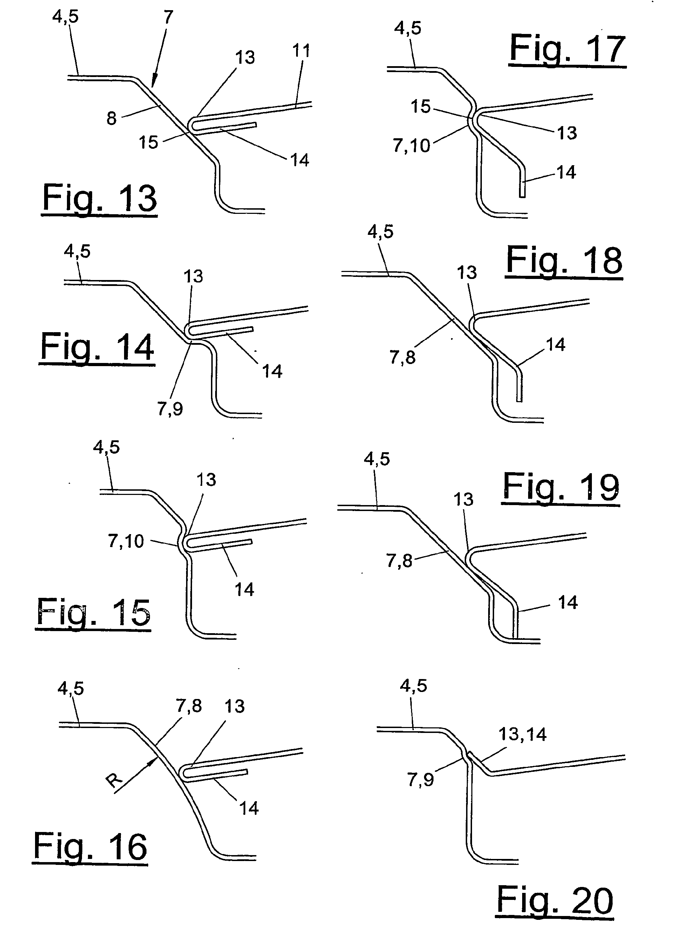

Die Bauteile (4), die nachfolgend als Seitenwände (4) angesprochen werden, haben eine vorgegebene Fügekontur (6) für das Dachblech (11). Diese Fügekontur (6) wird beispielsweise definiert durch einen in Figur 13 bis 20 in verschiedenen Formgebungsvarianten näher dargestellten Seitenfalz (5) des Seitenwandprofils. Dieser Seitenfalz (5) bietet einen Anlagebereich (7), an dem das Dachblech (11) mit seinem Rand (13) in geeigneter Weise beim Fügevorgang positioniert wird. Wie Figur 5, 11 und 8 in den Seitenansichten verdeutlichen, kann die Fügekontur (6) einen in Längsrichtung bzw. in Richtung der x-Achse gebogenen Verlauf haben. Die Fügekontur (6) kann verschiedene Maß- und Lageabweichungen haben. Beispielsweise kann ihre Wölbung variieren, wobei auch Unterschiede in der Formgebung der Fügekontur (6) zwischen den zwei Seitenwänden (4) auftreten können, insbesondere wenn die Seitenwände (4) windschief zueinander ausgerichtet sind. Die Toleranzen und Formabweichungen können in allen drei Achsen x, y und z sowohl in translatorischer, wie auch in rotatorischer Hinsicht auftreten. Mit der nachfolgend beschriebenen Fügetechnik können diese Toleranzen und Maß- oder Lageabweichungen kompensiert werden.

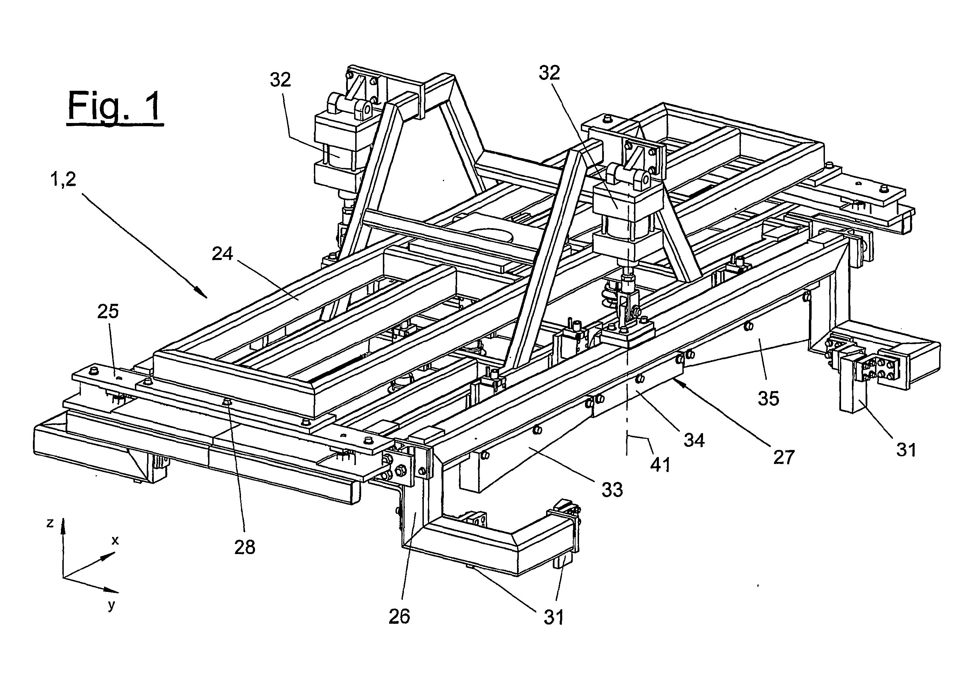

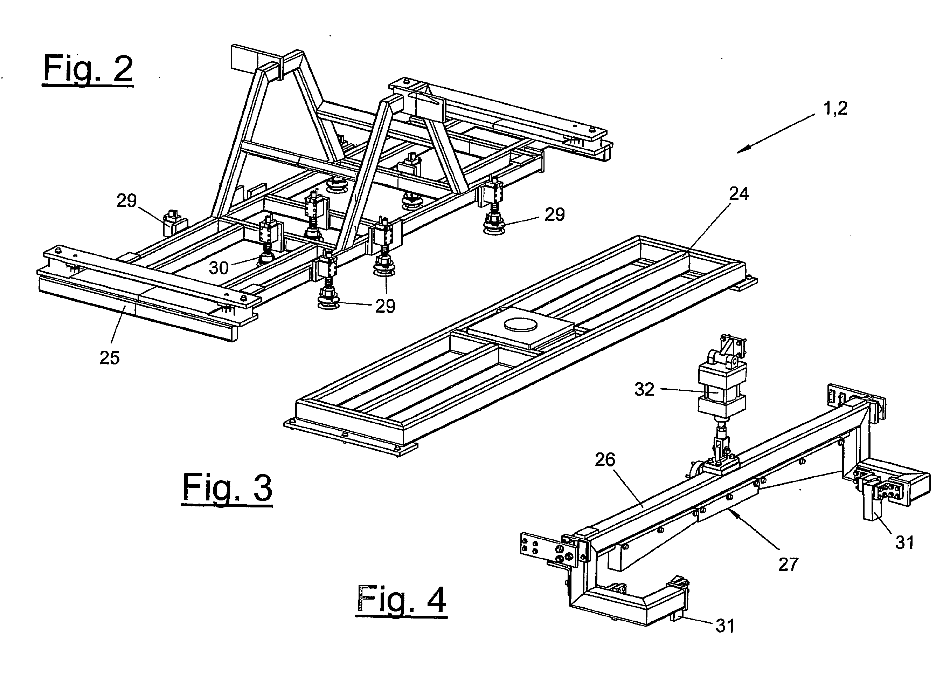

Figur 1 bis 4 zeigen den Fügegreifer (2) in perspektivischer Darstellung. Figur 1 verdeutlicht die Zusammenbausituation, während in Figur 2 bis 4 die einzelnen Greiferkomponenten getrennt dargestellt sind.

Der Fügegreifer (2) besteht aus einem Grundrahmen (24), an dem die Zuführeinrichtung (18) bzw. der Roboter (19) oder der Zuführschlitten (20) in geeigneter Weise angreifen. Der Grundrahmen (24) hat beispielsweise eine zentrale Andockstelle zur Verbindung mit der Roboterhand, wobei diese Verbindung ggf. mittels einer Wechselkupplung lösbar sein kann. Am Grundrahmen (24) ist ein Schwimmrahmen (25) vorzugsweise hängend angeordnet und begrenzt beweglich gelagert. Während schneller Bewegungen beim Transport oder dgl. kann der Schwimmrahmen (25) temporär abgesteckt und fixiert sein. Die bewegliche Lagerung bietet begrenzte Freiheitsgrade in der x- und/oder y-Achse und kann durch Puffer (28), Schwingungsdämpfer oder dergleichen ausgeführt sein. Am Schwimmrahmen (25) sind mehrere Greifelemente (29,30) für das Dachblech (11) angeordnet, bei denen es sich vorzugsweise um Sauggreifer mit federnd gelagerten Saugtellern handelt. Die Greifelemente (29,30) sind vorzugsweise nur in Zustellrichtung (41), hier in Richtung der z-Achse, begrenzt beweglich gelagert und seitlich geführt. Alternativ können die Greifelemente (29,30) aus Magnetgreifern oder anderen geeigneten Elementen zum beschädigungsfreien und genau positionierten Halten des Dachblechs (11) ausgebildet sein.

Am Schwimmrahmen (25) sind vorzugsweise an dessen beiden Längsseiten außenseitig vor den Greifelemente (29,30) zwei Andrückleisten (27) mit Zustellvorrichtungen (32) angeordnet. Die Andrückleisten (27) dienen der Anpressung der längslaufenden Dachränder (13) an der Fügekontur (6). Die Zustellvorrichtungen (32) stützen sich am Schwimmrahmen (25) über Stützböcke ab und sind beispielsweise mit pneumatischen Zylindern oder anderen Antriebselementen ausgerüstet. Die Andrückleisten (27) sind am Schwimmrahmen (25) in Zustellrichtung (41) beweglich geführt (nicht dargestellt). Die Wirkrichtung der Zustellvorrichtungen (32) verläuft ebenfalls in Zustellrichtung (41).

In Abwandlung der gezeigten Ausführungsform kann die Zahl und Anordnung der Andrückleiste (27) variieren. Beispielsweise können ein oder mehrere quer liegende und in y-Achsrichtung sich erstreckende alternative oder zusätzliche Andrückleisten (nicht dargestellt) vorhanden sein. Am Schwimmrahmen (25) und/oder an der oder den Andrückleisten (27) können über geeignete Ausleger oder dergleichen Rahmeneinweiser (31) angeordnet sein, die bei der Zustellung des Fügegreifers (2) mit den Seitenwänden (4) in Eingriff treten und die den Schwimmrahmen (25) bzw. die Andrückleisten (27) in die fügegerechte seitliche und vertikale Position zur Karosserie (3) bringen. Die Rahmeneinweiser (31) können seitliche Anschläge zur Seitenzentrierung und Auflagen zur Vertikalpositionierung haben.

Die Andrückleiste (27) ist an die jeweils zugehörige Fügekontur (6) des Bauteils (4) angepasst. Sie besitzt ein oder mehrere formstabile Leistensegmente (33,34,35,36,37). Die formstabilen Leistensegmente (33,34,35,36,37) sind insbesondere in Andrückrichtung steif und nicht verformbar. Sie besitzen eine vorgegebene feste Form, die sich beim Andrücken im Gegensatz zu den vorbekannten Andruckschläuchen nicht verändert.

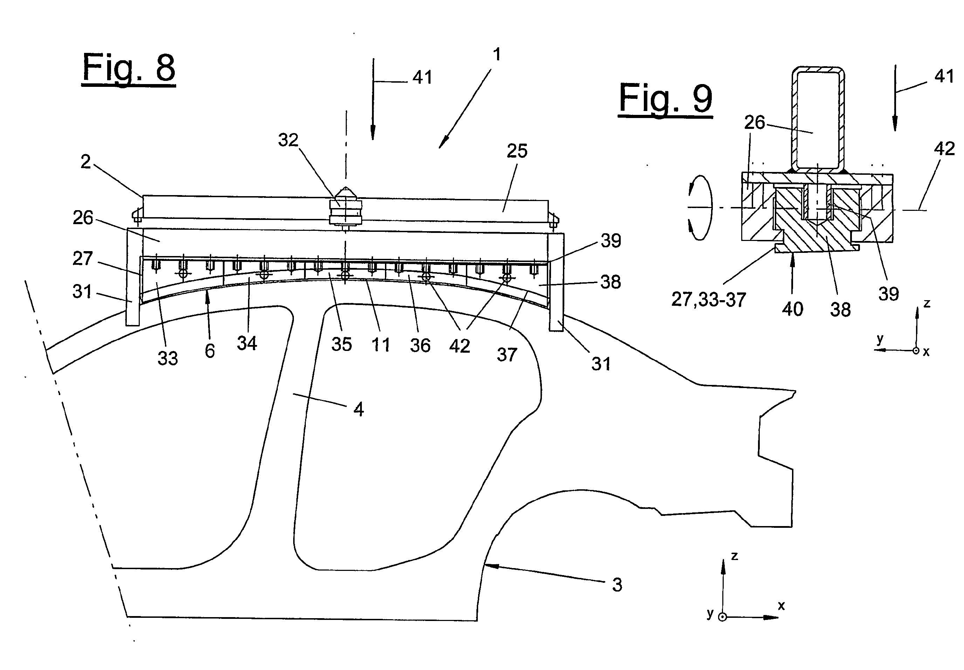

In der Variante von Figur 1 bis 4 sind beispielsweise drei Leistensegmente (33,34,35) vorhanden. Die Andrückleiste (27) von Figur 8 hat fünf Leistensegmente (33,34,35,36,37). Die Leistensegmente (33,34,35,36,37) sind in einer Reihe hintereinander entlang der Fügekontur (6) angeordnet und schließen dicht aneinander an. Durch ihre Formstabilität können die Leistensegmente (33,34,35,36,37) die von der Zustellvorrichtung (32) ausgeübte Zustell- und Anpresskraft gezielt auf das Dachblech (11) übertragen und dieses in die gewünschte Anlage an der Fügekontur (6) bringen. Im Unterschied zu einem Druckschlauch werden hierbei die Andruckkräfte nicht bei Auftreten von lokalen Widerständen zur Seite hin verteilt, sondern am gewünschten Ort ziel- und fügegerecht übertragen.

Wie Figur 8 und 9 zeigen, besteht die einzelne Andrückleiste (27) vorzugsweise jeweils aus einem längsgestreckten Leistenträger (26), der mit der Zustellvorrichtung (32) verbunden ist. Die Leistensegmente (33,34,35,36,37) sind vorzugsweise unabhängig voneinander in Zustellrichtung (41) linear begrenzt nachgiebig am Leistenträger (26) gelagert und geführt. Hierbei können die Leistensegmente (33,34,35,36,37) außerdem unabhängig voneinander um eine quer zur Längsachse der Andrückleiste (27) sich erstreckende Kippachse (42) begrenzt schwenkbar und nachgiebig gelagert sein. Hierdurch ist eine Kipp- oder Drehbewegung zur Anpassung an die Lage und Wölbung der Fügekontur (6) möglich. Die Führung und begrenzt nachgiebige Lagerung der Leistensegmente (33 bis 37) kann in beliebig geeigneter Weise ausgebildet sein.

In dem in Figur 9 dargestellten Ausführungsbeispiel bestehen die Leistensegmente (33 bis 37) aus formstabilen starren Formstücken (38) aus Kunststoff oder einem anderen geeigneten Material, ggf. auch einem Verbundmaterial, die an der Unterseite eine der Fügekontur (6) angepasste Andrückfläche (40) aufweisen. Die Formanpassung besteht in einer Formgebung der Andrückfläche (4), z.B. einer Wölbung der Andrückfläche (40) entsprechend der Wölbung der Fügekontur (6) in Längsrichtung bzw. in x-Achsrichtung. In Querrichtung bzw. in y-Achsrichtung können die Andrückflächen (40) eine Schräglage haben, die der Lage oder Wölbung des Dachblechs (11) in Querrichtung entspricht oder die an die gewünschte Fügeformgebung für das Dachblech (11) angepasst ist. Die Andrückflächen (40) sind glatt und vorzugsweise reibungsarm ausgebildet, so dass das Dachblech (11) ggf. beim Andrücken eine gleitende Relativbewegung ausführen kann.

Die Formstücke (38) sind am Leistenträger (26) in Richtung der z-Achse bzw. der Zustellrichtung (41) beweglich gelagert und hierzu an entsprechenden seitlichen Formbacken des Leistenträgers (26) geführt und nach unten gehalten. Die Formstücke (38) oder Leistensegmente (33 bis 37) können hierbei am Leistenträger (26) einzeln federnd gelagert und abgestützt sein. Hierfür sind beispielsweise pro Segment oder Formstück (38) drei in Zustellrichtung (41) wirkende Druckfedern (39) vorhanden, die in entsprechende Aufnahmen an der Oberseite der Formstücke (38) mit seitlichem Spiel eingreifen. Durch das Spiel ist die erwähnte Drehbewegung oder Schrägstellung gegenüber der Kippachse (42) möglich. Die Federelemente (39) können vorgespannt sein, um die erforderliche oder gewünschte Anpresskraft zu bieten.

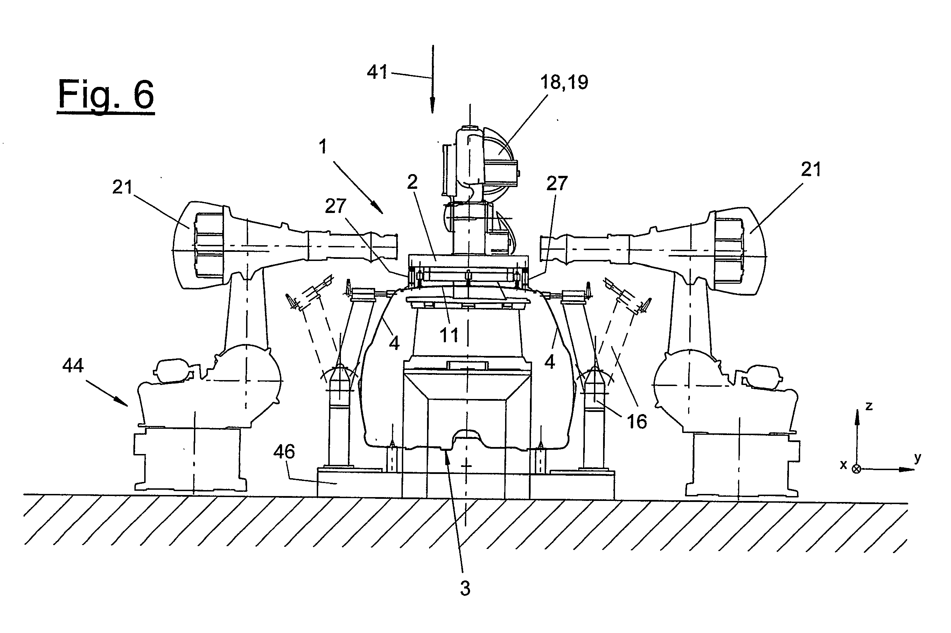

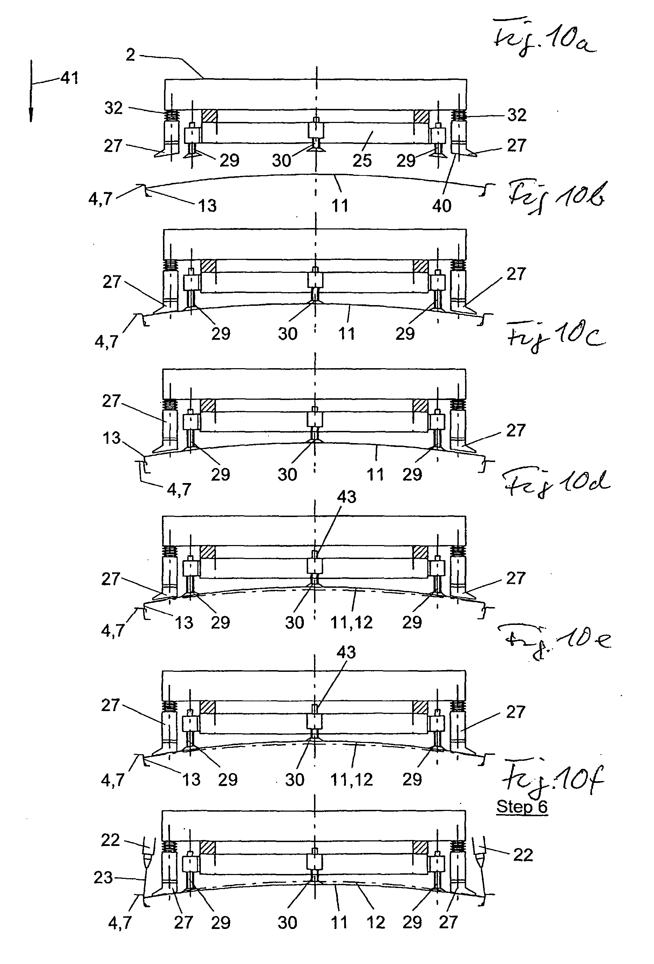

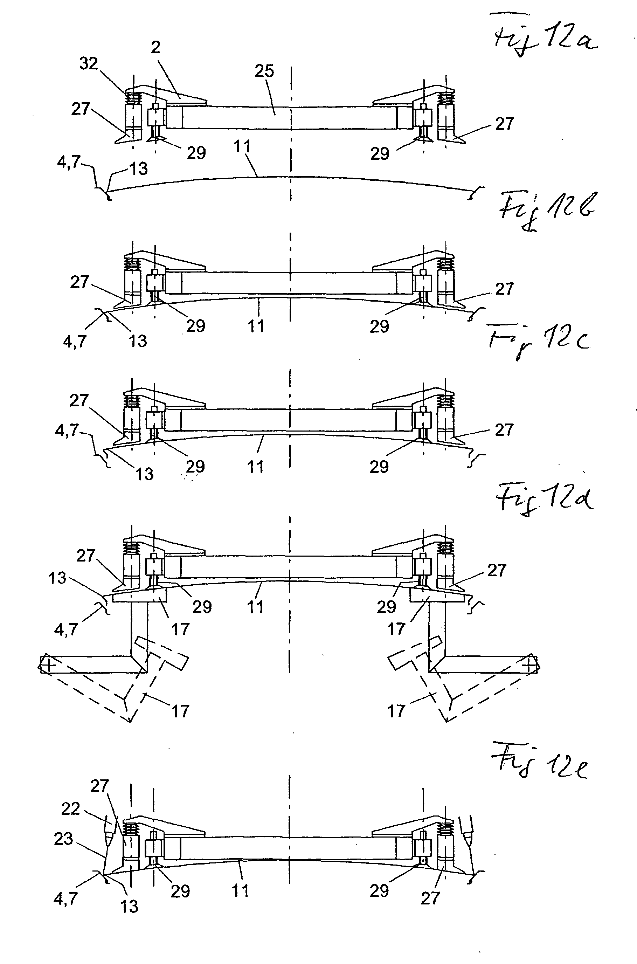

Wie Figur 6 in der Stirnansicht der Fügeeinrichtung (1) und die entsprechenden Darstellungen in Figur 10a-f und 12a-e verdeutlichen, sind die Greifelemente (29,30) im Innenbereich des Schwimmrahmens (25) mit vorzugsweise gleichmäßiger Verteilung angeordnet, wobei die randseitigen Greifelemente (29) gegenüber dem Dachrand (13) mit Rückversatz und Abstand angeordnet sind. Die Andrückleisten (27) sind ihrerseits außerhalb der randseitigen Greifelemente (29) angeordnet, wobei sie einen seitlichen Abstand zum überstehenden Fügeteilrand (13) aufweisen. Die Geometrie des Fügegreifers (2) ist hierbei entsprechend auf die Dimensionen des Dachblechs (11) abgestimmt. Der Versatz der Andrückleisten (27), die hierbei auch eine verjüngte Schnabel- oder Schuhform haben können, bieten Platz für einen Laserkopf (22) oder ein anderes Bearbeitungswerkzeug zum Verbinden des Dachblechrandes (13) mit den Seitenwänden (4).

Die am Schwimmrahmen (25) angeordneten Greifelemente gliedern sich in innere Greifelemente (30) und äußere randseitige Greifelemente (29), die getrennt voneinander betätigbar sind. Hierbei haben die innenliegenden und insbesondere das oder die in der Zentralachse angeordneten Greifelement(e) (30) eine Höhenverstellung (43), z.B. eine Spindel oder einen Zylinder, die in Zustellrichtung (41) wirkt und es ermöglicht, das Dachblech (11) im Innenbereich unabhängig von den randseitigen Greifelementen (29) nach oben und unten zu bewegen und hierbei eine mehr oder weniger starke elastische Wölbung (12) zu erzeugen. Die randseitigen Greifelemente (29) geben mit ihren gefederten, seitlich geführten und für eine Schrägstellung gelenkig gelagerten Saugtellern entsprechend gegen die Zustellrichtung (41) etwas nach.

Die Andrückleisten (27) können mittels der Zustellvorrichtung (32) in Zustellrichtung (41) relativ zu den Greifelementen (29,30) bewegt werden. Figur 10a-f und 12a-e zeigen hierfür in mehreren Schritten eine Fügefolge und Bewegungsabfolge der Komponenten des Fügegreifers (2). In der Variante von Figur 10a-f kommen hierbei die vorerwähnten zentral angeordneten Greifelemente (30) mit der Höhenverstellung (43) zum Einsatz. Bei der Variante von Figur 12a-e können sie ersatzlos fehlen oder durch einfachere Greifelemente ohne besondere Höhenstellfunktion ersetzt werden.

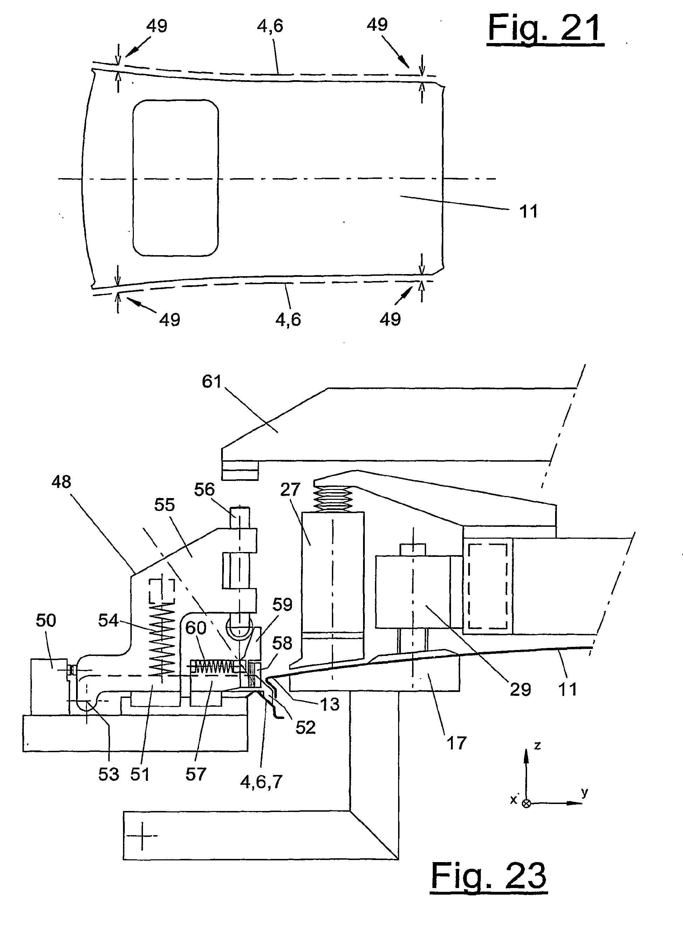

Die in Figur 10a-f gezeigte Fügefolge geht davon aus, dass das Dachblech (11) gemäß Schritt 1 von Figur 10a von einem Werker oder auf andere Weise auf der Dachöffnung der Karosserie (3) abgelegt ist und auf den Seitenfalzen (5) der Seitenwände (4) in einer nicht näher bestimmten Lage ruht. Die Zuführeinrichtung (18) senkt den Fügegreifer (2) auf das Dachblech (11) ab, wobei die Greifelemente (29,30) aktiviert werden und das Dachblech (11) bei Kontakt ansaugen und festhalten. Die Andrückleisten (27) können bei diesem Fügeschritt gemäß Schritt 2 von Figur 10b ein Stück nach oben gezogen sein und keinen Kontakt zum Dachblech (11) haben. Im nachfolgenden Schritt 3 von Figur 10c wird der Fügegreifer (2) mit dem Dachblech (11) angehoben, wobei ggf. eine seitliche Zentrierung des Dachblechs (11) relativ zum Fügegreifer (2) oder relativ zu den Bauteilen (4) stattfinden kann, wobei letztere zusammen mit einer Zentriervorrichtung (47) in Figur 21 bis 25 näher dargestellt und beschrieben ist. Im Schritt 4 von Figur 10d wird anschließend das ein- oder mehrfach vorhandene zentrale Greifelemente (30) mit seiner Höhenverstellung (43) betätigt und zieht das üblicherweise schon etwas vorgewölbte Dachblech (11) in einer zusätzlichen Wölbung (12) nach oben. Im nachfolgenden Schritt 5 von Figur 10e wird beim Absenken des Fügegreifers (2) das Dachblech (11) in Kontakt mit dem Anlagebereich (7) der Seitenfalz (5) gebracht und dabei so positioniert, dass die Dachränder (13) nur mit einem allenfalls geringen Druck am Anlagebereich (7) aufliegen. Aus dieser Position heraus werden anschließend die Andrückleisten (27) abgesenkt und pressen die Dachränder (13) in dichte Anlage an die Anlagebereiche (7), wobei Toleranzen in der Fügekontur (6) aufgenommen und kompensiert werden. Hierbei wird das Dachblech (11) zumindest elastisch und ggf. auch bleibend verformt. Im Schritt 6 von Figur 10f kann anschließend in der Fügestellung eine Fixierung der Dachränder (13) mittels Kleben, Schweißen, Löten oder durch andere Verbindungstechniken erfolgen. Vorzugsweise kommen hierbei Laserköpfe (22) zum Einsatz, die einen Laserstrahl (23) auf die Verbindungsstelle richten. Die Bearbeitungswerkzeuge bzw. Laserköpfe (22) können von geeigneten Bearbeitungsvorrichtungen (21), z.B. seitlich positionierten mehrachsigen Robotern geführt werden, wobei sie in Längsrichtung an der Dachkante (13) entlang bewegt werden. Vor oder während dieses Fixiervorgangs kann die Höhenverstellung (43) des oder der zentralen Greifelemente (30) wieder zurückbewegt und abgesenkt werden, wodurch die überhöhte Wölbung (11) wieder aufgehoben wird.

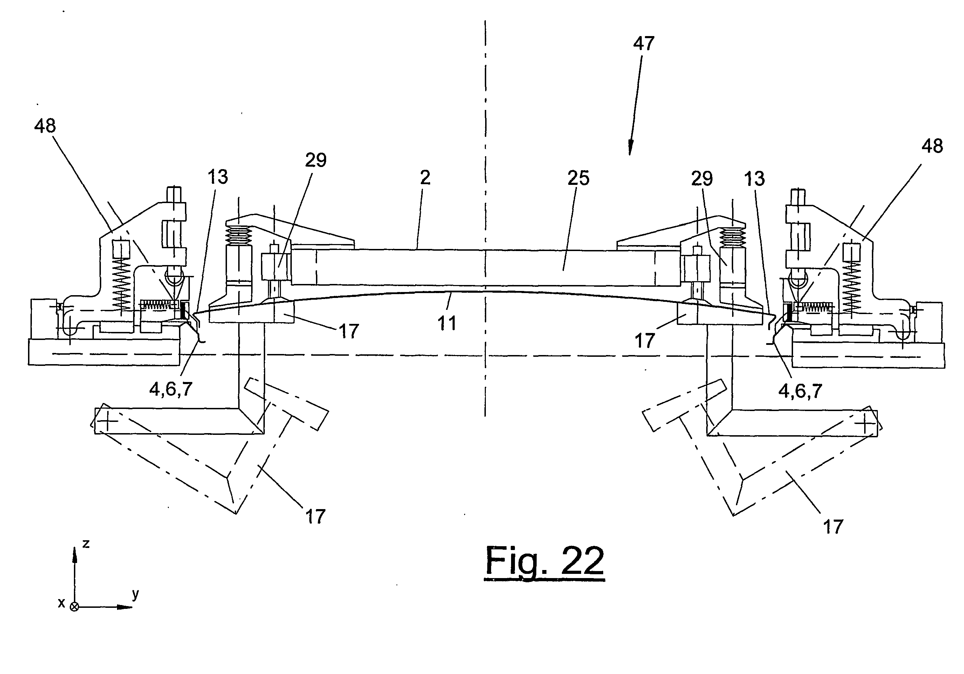

Figur 12a-e zeigen einen im Ablauf ähnlichen Fügevorgang, wobei das Dachblech (11) keine überhöhte Wölbung (12) erhält. Die Fügeschritte 1 bis 3 in Figur 12a-c entsprechen den gleich bezifferten Schritten von Figur 10a-c. In Schritt 4 von Figur 12d ist ein nachfolgend näher erläuterter Zentriervorgang dargestellt. Die Fügeeinrichtung (1) besitzt hierfür ein oder mehrere bewegliche Einweiser (17) für das Dachblech (11). Diese sind z.B. als geformte Zentrierauflagen ausgebildet und zustellbar, insbesondere schwenkbar an geeigneter Stelle, z.B. an einer Spanneinrichtung (16) der Bearbeitungsstation (44) gelagert. In der mit durchgezogenen Strichen dargestellten Einschwenkstellung bieten die beidseitigen Einweiser (17) eine Zentrierauflage für das Dachblech (11), auf der es automatisch in die richtige Zentrierlage rutscht, wenn es von den Greifelementen (29) kurzzeitig losgelassen wird.
Hierbei kann alternativ auch die in Figur 22 bis 25 gezeigte Zentriervorrichtung zum Einsatz kommen. Anschließend nehmen die Greifelemente (29) das Dachblech (11) wieder auf und bringen es in die in Schritt 5 von Figur 12e gezeigte Fügestellung, die wiederum derjenigen von Schritt 6 von Figur 10f mit Ausnahme der Wölbung (11) entspricht.

Bei der Variante von Figur 5 bis 7 mit dem mehrachsigen Roboter (19) als Zuführeinrichtung (18) kann das Dachblech (11) im Karosseriebezug gefügt werden, der unter Umständen vom Netzbezug abweicht. In diesem Fall wird von der Ist-Lage der Seitenwände (4) ausgegangen, die durch seitliche bewegliche Spanneinrichtungen (16) weitgehend verformungsfrei gehalten werden. Die Spanneinrichtung (16) richtet sich hierbei nach der vorhandenen Geometrie der Karosserie (3), auch wenn diese toleranzbehaftet sein sollte. Das Dachblech (11) wird dann zentriert auf der Karosserie (3) gefügt.

In der Variante von Figur 11 wird nach dem Netzbezug, d.h. nach der aus der Konstruktion vorgegebenen exakten Soll-Geometrie und -Position der Karosserie (3) gefügt, wobei die Spanneinrichtung (16) die Seitenwände (4) aus einer eventuellen Fehlstellung in die konstruktiv über den sogenannten Netzbezug vorgegebene Soll-Lage bringt. Der Zuführschlitten (20) ist in diesem Fall nach dem Netzbezug in Richtung der x- und y-Achse ausgerichtet und fügt das Dachteil (11) in der vorgegebenen Soll-Geometrie. Figur 13 bis 20 zeigen mögliche Fügeformen von Dachblech (11) und Seitenwänden (4) im abgebrochenen Querschnitt. In Figur 13 ist der Anlagebereich (7) am Seitenfalz (5) als schräg zur Karosserieinnenseite abfallende Anlagefläche (8) ausgebildet, die im Querschnitt eine geradlinige Erstreckung hat. Die beiden Anlageflächen (8) an der linken und rechten Seitenwand (4) bilden hierdurch eine Trichterführung zur zentrierten Aufnahme des Dachblechs (11), welches am Dachrand (13) einen umgebördelten Randflansch (14) haben kann. Der Dachrand (13) liegt dadurch mit einer Rundung an der Kontaktstelle (15) auf der Anlagefläche (8). Der hierbei entstehende und nach oben offene Spalte ist günstig zum Löten, insbesondere Laserlöten der Teile (4,11).

In der Variante von Figur 14 besitzt der Anlagebereich (7) eine nach innen vorspringende Anlagestufe (9), auf der das Dachblech (11) mit seinem Randflansch (14) definiert aufliegt. Eine genaue Einpassung des Dachrands (13) in die Anlagestufe (9) kann durch eine Dachblechverformung, z. B. mittels einer Wölbungsänderung oder einer Andrückbewegung der Andrückleisten (27) erfolgen.

Die Variante von Figur 15 zeigt eine formschlüssige Verbindung, die z. B. als Schnappverbindung ausgebildet ist. Hierbei ist im abfallenden Anlagebereich (7) eine konkave Aufnahme (10) eingeformt, in die das Dachblech (11) mit der randseitigen Rundung am Übergang in den Randflansch (14) passend einschnappen kann. Dies wird in der vorerwähnten Weise durch ein Überwölben des Dachblechs (11) und ein entsprechendes Einziehen des Dachrandes (13) beim Positionieren und ein nachfolgendes Entwölben des Dachblechs (11) erreicht, wobei der Dachrand (13) in einer Querbewegung in die konkave Aufnahme (10) einschnappt. Bei dieser Fügeverbindung kann die Dachblechbreite stets Übermaß haben, so dass die Toleranzen über eine Restwölbung des Dachblechs (11) aufgenommen werden.

Die Abwandlung von Figur 16 ist eine Variante zu Figur 13, wobei die schräg einwärts gerichtete Anlagefläche (8) eine gewölbte Form und einen Radius R hat.

Die Abwandlung von Figur 17 entspricht weitgehend der Variante von Figur 15, wobei die konkave Aufnahme (10) und die Rundung am Dachrand (13) etwas größer sind. Der Randflansch (14) ist hierbei zunächst schräg nach innen und im Endbereich vertikal nach unten abgewinkelt. Hierdurch ergibt sich eine zentrier- und einweisegünstige Formgebung, die ein gegenseitiges Positionieren von Dachblech (11) und Seitenwänden (4) erleichtert.

Eine ähnliche Funktion hat auch die Formgebung von Figur 18 mit der im Querschnitt geraden Anlagefläche (8), auf der die schräg nach innen abgewinkelte Flanke des Randflansches (14) mit einem je nach Winkeltoleranz mehr oder weniger großen Kontaktbereich aufliegt. Bei Figur 18 schwebt die Unterkante des Randflansches (14) mit Abstand über dem weiter nach innen vorstehenden Seitenfalz (5). Bei der hierauf aufbauenden Abwandlung von Figur 19 ist der Seitenfalz (5) in der Höhe verkürzt, so dass der Randflansch (14) auf dem horizontalen Bodenbereich des Seitenfalzes (5) zusätzlich aufsteht und abgestützt ist.

In der letzten Variante von Figur 20 ist der Randflansch (14) in Abweichung zu den bisherigen Varianten nach schräg oben und außen abgewinkelt, wobei er mit seiner Randkante auf einer kleinen einspringenden Anlagestufe (9) des Anlagebereichs (7) anliegt. Statt der Anlagestufe (9) kann auch eine schwach gekrümmte konkave Aufnahme (10) vorhanden sein. In weiterer nicht dargestellter Abwandlung kann der abgewinkelte Randflansch (14) von Figur 20 an einer schrägen oder schwach gekrümmten Anlagefläche (8) plan anliegen oder ähnlich wie in Figur 18 und 19 eine Schrägstellung mit Linienanlage haben.

Bei diesen beschriebenen Varianten mit Anlagestufe (9) oder konkaver Aufnahme (10) ist jeweils eine definierte Relativposition zwischen Dachblech (11) und Seitenfalzen (5) gegeben, die durch die Andrückleisten (27) beim Fügen gesichert wird, wobei etwaige Toleranzen über eine veränderte Wölbung (12) des Dachblechs (11) in Querrichtung aufgenommen werden. Dies können bleibende Verformungen des Dachblechs (11) sein. Bei den Varianten mit den geraden oder den gerundeten Anlageflächen (8) und der trichterartigen Zentrierung können Dachblechtoleranzen über eine veränderte Höhenlage am Anlagebereich (7) aufgenommen werden. Die gezeigten Ausführungsformen eignen sich allesamt besonders gut zum Löten, insbesondere Laserlöten. Die Varianten mit formschlüssiger Verbindung über eine Anlagestufe (9) oder eine konkave Aufnahme (10) bieten aber auch besondere Vorteile für eine Klebeverbindung der Teile (4,11), die gegebenenfalls durch eine Wärmezufuhr mittels Laserstrahl aktiviert bzw. ausgehärtet wird. Ansonsten ist es möglich, die Teile (4,11) auf beliebige andere geeignete Weise gegenseitig zu fixieren.

Figur 21 bis 25 verdeutlichen die eingangs erwähnte Zentrierfunktion und die hierfür eingesetzte Zentriervorrichtung (47). Figur 21 zeigt hierbei eine Draufsicht auf ein Fügeteil (11), z.B. ein Dachblech, welches im Bauteilbezug gefügt werden soll. Hierfür wird das an mehreren, vorzugsweise an vier in den Eckbereichen geordneten Zentrierstellen (49) relativ zu den beiden seitlichen Bauteilen (4) bzw. der Fügekontur (6) zentriert.

Figur 22 bis 25 verdeutlichen die hierbei eingesetzte Zentriervorrichtung (47). Sie besteht aus mehreren Zentriereinheiten (48), die jeweils an den Zentrierstellen (49) an das jeweilige Bauteil (4) und die Fügekontur (6) mittels eines Gelenkarmroboters oder auf sonstige geeignete Art und Weise angesetzt werden. Die Zentriereinheiten (48) sind untereinander gleich ausgebildet und bestehen jeweils aus einem mit dem Roboter oder Manipulator (nicht dargestellt) verbundenen Gestell (50), auf dem ein erster Schlitten (51) oder sog. Hauptschlitten mit einem Tastfinger (52) angeordnet ist. Der Tastfinger (52) ist an die Geometrie der Fügekontur (6) bzw. des Anlagebereichs (7) angepasst und hat eine schräg nach unten abgewinkelte Form. Er ist mit dem Schlitten (51) fest verbunden. Der Hauptschlitten (51) ist gegenüber dem Gestell (50) in mindestens einer Achse, vorzugsweise in zwei Achsen relativ beweglich, wobei er in der gezeigten Ausführungsform sich einerseits um ein Gelenk (53) drehen kann und somit eine Bewegungskomponente oder Ausweichmöglichkeit nach oben in der Z-Achse bietet. Andererseits ist der Hauptschlitten (51) translatorisch in der Horizontalen und in der Y-Achse beweglich.

Beim Ansetzen der Zentriereinheit (48) gemäß Figur 23 wird zunächst die Position des Anlagebereichs (7) am Bauteil (4) mit dem Tastfinger (52) gesucht. Durch die vorerwähnten Beweglichkeiten besteht hierbei eine Ausweichmöglichkeit in der Z-Achse gegen die Wirkung einer gestellfesten Feder (54) und in der Y-Achse gegen eine ebenfalls vorhandene Rückholfeder oder dergleichen, die in der Zeichnung nicht dargestellt ist.

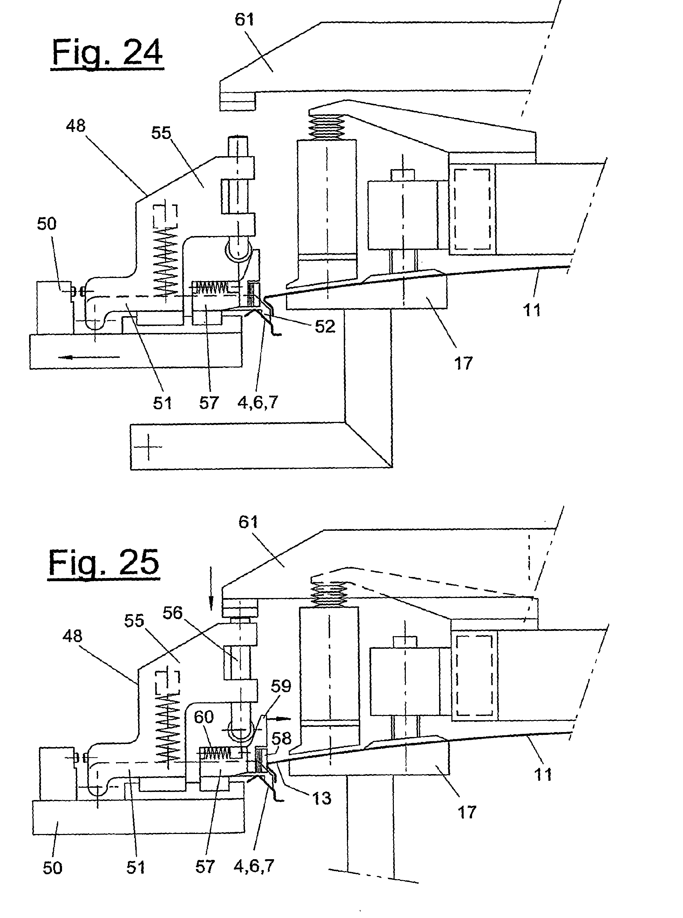

Beim Ansetzen der Zentriereinheiten (48) ist das Fügeteil (11) angehoben und gibt den Zugang des Tastfingers (52) zum Anlagebereich (7) frei. Sobald der Anlagefinger (52) Kontakt mit dem Anlagebereich (7) hat, wird gemäß Figur 24 das Gestell (50) vom Roboter seitlich nach außen in der Y-Achse weggezogen, so dass der Tastfinger (52) eine feste und definierte Anlage am Anlagebereich (7) hat.

Auf dem Hauptschlitten (51) ist ein zweiter Schlitten oder Hilfsschlitten (57) in der Y-Achse translatorisch beweglich gegen eine mit dem Hauptschlitten (51) verbundene Feder (60) gelagert. Am Hilfsschlitten (57) ist eine Umlenkung (59) für eine vertikale Betätigung angeordnet, welche im vorliegenden Fall als Keilführung ausgebildet ist. An der dem Fügeteil (11) zugewandten Seite des Hilfsschlittens (57) ist ferner ein Zentrierstück (58) angeordnet, welches mit dem Rand (13) des Fügeteils (11) zusammenwirkt.

Auf dem Hauptschlitten (51) ist eine Halterung (55) für einen in der Z-Achse beweglichen Stempel (56) angeordnet, welcher an seinem unteren Ende eine Rolle oder dergleichen anderes Teil trägt, das mit der Umlenkung (59) bzw. Keilführung zusammenwirkt. Der Stempel (56) kann durch einen Stempelantrieb (61) betätigt und vertikal nach unten gezogen werden. Der Stempelantrieb (51) kann am Fügegreifer (2) oder an beliebig anderer geeigneter Stelle angeordnet sein. Die Stempelantriebe (61) werden bei allen Zentriereinheiten (48) gleichzeitig und synchron betätigt bzw. bewegt.

Sobald die vier Zentriereinheiten (48) in der vorbeschriebenen Weise mit ihren Tastfingern (52) an den Anlagebereichen (7) positioniert sind, besteht ein Bauteilbezug bzw. ein Bezug zur Fügekontur (6). Aus dieser Position heraus werden bei allen Zentriereinheiten (58) die Stempel (56) synchron nach unten bewegt, wodurch die Hilfsschlitten (57) mit den Zentrierstücken (58) ebenfalls synchron horizontal gegen die Fügeteilränder (13) bewegt werden. Das Fügeteil (11) liegt auf den Einweisern (17) lose auf, wobei die Greifelemente (29) gelöst oder deaktiviert sind. Durch die synchron an allen vier Zentrierstellen (49) vorwärts bewegten Zentrierstücke (58) wird das Fügeteil (11) in eine zentrierte Lage bezüglich der Fügekontur (6) bzw. der Anlagebereiche (7) gebracht.

Sobald die Zentrierlage eingenommen ist, halten die Greifelemente (29) das Fügeteil (11) wieder fest, die Stempelantriebe (61) werden zurückgezogen und die Zentriereinheiten (48) sowie die Einweiser (17) entfernt. Aus dieser Position kann nun der Fügevorgang gemäß in Figur 10e und 10f bzw. Figur 12e stattfinden.

Abwandlungen der gezeigten Ausführungsformen sind in verschiedener Weise möglich. Hierbei lassen sich die Einzelmerkmale der beschriebenen Ausführungsbeispiele beliebig untereinander vertauschen und kombinieren. Variabel sind insbesondere die konstruktiven Ausgestaltungen des Fügegreifers (2) und seiner Komponenten. Die Andrückleiste (27) kann z.B. aus ein oder mehreren Reihen dünner und ggf. einzeln oder gruppenweise gefederter Stifte bestehen, welche die Leistensegmente bilden. Zwischen den Leistensegmenten können außerdem Abstände in Längsrichtung bzw. x-Achse bestehen.

Insbesondere kann die Zuordnung der Greifelemente (29,30) zu den Andrückleisten (27) variieren. Beispielsweise können Greifelemente (29) zwischen entsprechend voneinander in Längsrichtung distanzierten Leistensegmenten (33) bis (37) angeordnet sein. Es ist auch möglich, die in Z-Richtung nachgiebigen Greifelemente (29) zwischen den Andrückleisten (27) und den Fügeteilrändern (13) anzuordnen. Der in den Zeichnungen dargestellte Rückversatz zwischen den Andrückleisten (27) und den Fügeteilrändern (13) muss ebenfalls nicht vorhanden sein. Er ist für die Zugänglichkeit der Fügestellen und der Laserköpfe (22) von Vorteil. Der Rückversatz kann alternativ entfallen, insbesondere wenn die Fügeverbindung durch eine Kontaktklebung geschaffen wird. Die Laserköpfe (22) oder andere Verbindungswerkzeuge können mit dem Fügegreifer (2) verbunden sein und mitgeführt werden.

### BEZUGSZEICHENLISTE

- 1: Fügeeinrichtung
- 2: Fügegreifer
- 3: Karosserie
- 4: Bauteil, Seitenteil
- 5: Seitenfalz
- 6: Fügekontur
- 7: Anlagebereich
- 8: Anlagefläche
- 9: Anlagestufe
- 10: konkave Aufnahme
- 11: Fügeteil, Dachblech
- 12: Wölbung
- 13: Dachrand
- 14: Randflansch
- 15: Kontaktstelle
- 16: Spanneinrichtung
- 17: Einweiser für Fügeteil
- 18: Zuführeinrichtung
- 19: Roboter
- 20: Zuführschlitten
- 21: Bearbeitungsvorrichtung, Roboter
- 22: Bearbeitungswerkzeug, Laserkopf
- 23: Laserstrahl
- 24: Grundrahmen
- 25: Schwimmrahmen
- 26: Leistenträger
- 27: Andrückleiste
- 28: Puffer, Schwingungsdämpfer
- 29: Greifelement, Sauggreifer seitlich
- 30: Greifelement, Sauggreifer zentral
- 31: Rahmeneinweiser
- 32: Zustellvorrichtung, Zylinder
- 33: Leistensegment, Segment
- 34: Leistensegment, Segment
- 35: Leistensegment, Segment
- 36: Leistensegment, Segment
- 37: Leistensegment, Segment
- 38: Formstück
- 39: Federelement
- 40: Andrückfläche
- 41: Zustellrichtung
- 42: Kippachse
- 43: Höhenverstellung
- 44: Bearbeitungsstation
- 45: Stationsgestell
- 46: Bauteilaufnahme
- 47: Zentriervorrichtung
- 48: Zentriereinheit
- 49: Zentrierstelle
- 50: Gestell
- 51: Schlitten, Hauptschlitten
- 52: Tastfinger
- 53: Gelenk
- 54: Feder
- 55: Halterung
- 56: Stempel
- 57: Schlitten, Hilfsschlitten
- 58: Zentrierstück
- 59: Umlenkung, Keilführung
- 60: Feder
- 61: Stempelantrieb

## Patentansprüche

1. Fügeeinrichtung zum Fügen von Fügeteilen (11), insbesondere Dachblechen, an Bauteilen (4) von Fahrzeugkarosserien oder -aufbauten (3), mit ein oder mehreren Fügegreifern (2), bestehend aus mindestens einem Rahmen (24) und einem Schwimmrahmen (25), mehreren Greifelementen (29,30) und einem auf das Fügeteil (11) einwirkenden Andrückelement, **dadurch gekennzeichnet, dass** der Fügegreifer (2) mindestens eine der Fügekontur (6) des Bauteils (4) angepasste Andrückleiste (27) mit einer am Schwimmrahmen (25) abgestützten Zustellvorrichtung (32) aufweist, wobei die Andrückleiste (27) einen mit der Zustellvorrichtung (32) verbundenen Leistenträger (26) aufweist, an dem ein oder mehrere formstabile Leistensegmente (33,34,35,36,37) angeordnet sind.

2. Fügeeinrichtung nach Anspruch 1, **dadurch gekennzeichnet, dass** an dem Leistenträger (26) die Leistensegmenten (33,34,35,36,37) unabhängig voneinander in Zustellrichtung (41) begrenzt nachgiebig gelagert sind.

3. Fügeeinrichtung nach Anspruch 1 oder 2, **dadurch gekennzeichnet, dass** die Leistensegmente (33,34,35,36,37) unabhängig voneinander um eine quer zur Längsachse der Andrückleiste (27) sich erstreckende Kippachse (42) begrenzt nachgiebig gelagert sind.

4. Fügeeinrichtung nach Anspruch 1, 2 oder 3, **dadurch gekennzeichnet, dass** die Leistensegmente (33,34,35,36,37) am Leistenträger (26) einzeln federnd (39) gelagert sind.

5. Fügeeinrichtung nach einem der vorhergehenden Ansprüche, **dadurch gekennzeichnet, dass** die Leistensegmente (33,34,35,36,37) als Formstücke (38) mit einer der Fügekontur (6) angepassten Andrückfläche (40) ausgebildet sind.

6. Fügeeinrichtung nach einem der vorhergehenden Ansprüche, **dadurch gekennzeichnet, dass** der Fügegreifer (2) einen mit einer Zuführeinrichtung (18) verbindbaren Grundrahmen (24) und einen daran begrenzt beweglich gelagerten Schwimmrahmen (25) aufweist, wobei am Schwimmrahmen (25) mehrere Greifelemente (29,30) und mindestens zwei seitliche Andrückleisten (27) mit ihren Zustellvorrichtungen (32) angeordnet sind.

7. Fügeeinrichtung nach einem der vorhergehenden Ansprüche, **dadurch gekennzeichnet, dass** am Schwimmrahmen (25) seitliche Rahmeneinweiser (31) zum Eingriff mit den Bauteilen (4) angeordnet sind.

8. Fügeeinrichtung nach einem der vorhergehenden Ansprüche, **dadurch gekennzeichnet, dass** die Greifelemente (29,30) in Zustellrichtung (41) begrenzt beweglich gelagert und seitlich geführt sind.

9. Fügeeinrichtung nach einem der vorhergehenden Ansprüche, **dadurch gekennzeichnet, dass** die Greifelemente (29,30) als Sauggreifer mit federnd gelagerten Saugtellern ausgebildet sind.

10. Fügeeinrichtung nach einem der vorhergehenden Ansprüche, **dadurch gekennzeichnet, dass** die Greifelemente (29,30) im Innenbereich des Schwimmrahmens (25) verteilt angeordnet und außenseitig von den Andrückleiste (27) umgeben sind, wobei die Andrückleiste (27) mit seitlichem Abstand zum überstehenden Fügeteilrand (13) angeordnet sind.

11. Fügeeinrichtung nach einem der vorhergehenden Ansprüche, **dadurch gekennzeichnet, dass** die innen liegenden Greifelemente (30) eine Höhenverstellung (43) aufweisen.

12. Fügeeinrichtung nach einem der vorhergehenden Ansprüche, **dadurch gekennzeichnet, dass** die inneren und äußeren Greifelemente (29,30) getrennt betätigbar sind.

13. Fügeeinrichtung nach einem der vorhergehenden Ansprüche, **dadurch gekennzeichnet, dass** die Fügeeinrichtung (1) mindestens einen beweglichen Einweiser (17) für das Fügeteil (11) aufweist.

14. Fügeeinrichtung nach einem der vorhergehenden Ansprüche, **dadurch gekennzeichnet, dass** die Einweiser (17) als geformte Zentrierauflagen für das Fügeteil (11) ausgebildet und zustellbar angeordnet sind.

15. Fügeeinrichtung nach einem der vorhergehenden Ansprüche, **dadurch gekennzeichnet, dass** die Fügeeinrichtung (1) eine an dem oder den Bauteilen (4) orientierte Zentriervorrichtung (47) aufweist.

16. Fügeeinrichtung nach einem der vorhergehenden Ansprüche, **dadurch gekennzeichnet, dass** die Zentriervorrichtung (47) mehrere an die Fügekontur (6) anlegbare Zentriereinheiten (48) mit beweglichen Zentrierstücken (58) aufweist, welche synchron gegen das lose am Fügegreifer (2) gehaltene Fügeteil (11) zustellbar sind.

17. Fügeeinrichtung nach einem der vorhergehenden Ansprüche**, dadurch gekennzeichnet, dass** die zuführeinrichtung (18) für den Fügegreifer (2) als mehrachsige Roboter (19) ausgebildet ist, wobei das Fügeteil (11) nach der vorhandenen Bauteilgeometrie fügbar ist.

18. Fügeeinrichtung nach einem der Ansprüche 1 bis 14, **dadurch gekennzeichnet, dass** die Zuführeinrichtung (18) für den Fügegreifer (2) als in Zustellrichtung (41) geführter Zuführschlitten (20) ausgebildet ist, wobei das Fügeteil (11) nach einem Netzbezug der Karosserie (3) fügbar ist.

19. Verfahren zum Fügen von Fügeteilen (11), insbesondere Dachblechen, an Bauteilen (4) von Fahrzeugkarosserien oder -aufbauten (3), mit ein oder mehreren Fügegreifern (2), bestehend aus mindestens einem Rahmen (24), einem Schwimmrahmen (25), mehreren Greifelementen (29,30) und einem auf das Fügeteil (11) einwirkenden Andrückelement, **dadurch gekennzeichnet, dass** das Fügeteil (11) mit seinem Fügeteilrand (13) vom Fügegreifer (2) mit mindestens einer der Fügekontur (6) des Bauteils (4) angepassten und aus einem Leistenträger (26) mit ein oder mehreren formstabilen Leistensegmenten (33,34,35,36,37) bestehenden Andrückleiste (27) an den Anlagebereich (7) des Bauteils (4) mittels einer am Schwimmrahmen (25) abgestützten Zustellvorrichtung (32) angepresst und fixiert wird.

20. Verfahren nach Anspruch 19, **dadurch gekennzeichnet, dass** das Fügeteil (11) beim Fügen und Anpressen bleibend verformt wird.

21. Verfahren nach Anspruch 19 oder 20, **dadurch gekennzeichnet, dass** das Fügeteil (11) mit seinem Fügeteilrand (13) mit einer konkaven Aufnahme (10) des Anlagebereich (7) formschlüssig verbunden wird.

22. Verfahren nach Anspruch 19 oder 20, **dadurch gekennzeichnet, dass** das Fügeteil (11) mit seinem Fügeteilrand (13) an einer ebenen oder gewölbten Anlagefläche (8) des Anlagebereich (7) angelegt wird.

23. Verfahren nach Anspruch 19 oder 20, **dadurch gekennzeichnet, dass** das Fügeteil (11) mit seinem Fügeteilrand (13) an einer Anlagestufe (9) des Anlagebereich (7) angelegt wird.

24. Verfahren nach einem der vorhergehenden Ansprüche, **dadurch gekennzeichnet, dass** das Fügeteil (11) vor dem Fügen unter Bildung einer wölbung (12) elastisch verformt wird.

25. Verfahren nach einem der vorhergehenden Ansprüche, **dadurch gekennzeichnet, dass** das Fügeteil (11) durch Laserlöten, Laserschweißen oder Kleben fixiert wird.

26. Verfahren nach einem der vorhergehenden Ansprüche, **dadurch gekennzeichnet, dass** das Fügeteil (11) vor dem Fixieren am Fügegreifer (2) auf die Bauteile (4) oder auf einen Netzbezug zentriert wird.

## Claims

1. Assembly device for joining assembly parts (11), in particular roof panels, to components (4) of vehicle bodies or superstructures (3), with one or more assembly grippers (2), comprising at least one frame (24) and one floating frame (25), a plurality of gripping elements (29, 30), and a pressing element acting on the assembly part (11), **characterized in that** the assembly gripper (2) comprises at least one pressing strip (27) which is tailored to the assembly contour (6) of the component (4) and which has an infeed device (32) supported on the floating frame (25), wherein the pressing strip (27) comprises a strip carrier (26) which is connected to the infeed device (32) and on which one or more dimensionally stable strip segments (33, 34, 35, 36, 37) are arranged.

2. Assembly device according to Claim 1,
**characterized in that** the strip segments (33, 34, 35, 36, 37) are mounted independently of one another on the strip carrier (26) such that they have a limited degree of flexibility in the infeed direction (41).

3. Assembly device according to Claim 1 or 2,
**characterized in that** the strip segments (33, 34, 35, 36, 37) are mounted independently of one another with a limited degree of flexibility about a tilting axis (42) which extends transversely to the longitudinal axis of the pressing strip (27).

4. Assembly device according to Claim 1, 2 or 3, **characterized in that** the strip segments (33, 34, 35, 36, 37) are individually spring-mounted (39) on the strip carrier (26).

5. Assembly device according to one of the preceding claims, **characterized in that** the strip segments (33, 34, 35, 36, 37) are designed as mouldings (38) having a pressing surface (40) tailored to the assembly contour (6).

6. Assembly device according to one of the preceding claims, **characterized in that** the assembly gripper (2) has a basic frame (24), which can be connected to a feeding device (18), and a floating frame (25) mounted on the basic frame with a limited degree of mobility, wherein a plurality of gripping elements (29, 30) and at least two lateral pressing strips (27), together with their infeed devices (32), are arranged on the floating frame (25).

7. Assembly device according to one of the preceding claims, **characterized in that** lateral frame guides (31) intended for engaging with the components (4) are arranged on the floating frame (25).

8. Assembly device according to one of the preceding claims, **characterized in that** the gripping elements (29, 30) are mounted with a limited degree of mobility in the infeed direction (41) and are guided laterally.

9. Assembly device according to one of the preceding claims, **characterized in that** the gripping elements (29, 30) are designed as suction grippers with spring-mounted suction cups.

10. Assembly device according to one of the preceding claims, **characterized in that** the gripping elements (29, 30) are arranged in a distributed manner within the inner region of the floating frame (25) and surrounded on the outside by the pressing strips (27), wherein the pressing strips (27) are arranged with a lateral spacing from the protruding assembly part edge (13).

11. Assembly device according to one of the preceding claims, **characterized in that** the inner gripping elements (30) have a height-adjustment means (43).

12. Assembly device according to one of the preceding claims, **characterized in that** the inner and outer gripping elements (29, 30) can be actuated separately.

13. Assembly device according to one of the preceding claims, **characterized in that** the assembly device (1) comprises at least one movable guide (17) for the assembly part (11).

14. Assembly device according to one of the preceding claims, **characterized in that** the guides (17) are designed as shaped centring supports for the assembly part (11) and arranged such that they can be fed into position.

15. Assembly device according to one of the preceding claims, **characterized in that** the assembly device (1) comprises a centring device (47) oriented on the component or components (4).

16. Assembly device according to one of the preceding claims, **characterized in that** the centring device (47) comprises a plurality of centring units (48) which can be placed against the assembly contour (6) and which have movable centring pieces (58) which can be fed synchronously into position against the assembly part (11) held loosely on the assembly gripper (2).

17. Assembly device according to one of the preceding claims, **characterized in that** the feeding device (18) for the assembly gripper (2) is designed as a multi-axis robot (19), wherein the assembly part (11) can be assembled according to the component geometry which is present.

18. Assembly device according to one of Claims 1 to 14, **characterized in that** the feeding device (18) for the assembly gripper (2) is designed as a feeding carriage (20) guided in the infeed direction (41), wherein the assembly part (11) can be assembled according to a network reference of the vehicle body (3).

19. Method for joining assembly parts (11), in particular roof panels, to components (4) of vehicle bodies or superstructures (3), with one or more assembly grippers (2), comprising at least one frame (24), one floating frame (25), a plurality of gripping elements (29, 30), and a pressing element acting on the assembly part (11), **characterized in that** the assembly gripper (2), by way of at least one pressing strip (27) which is tailored to the assembly contour (6) of the component (4) and which comprises a strip carrier (26) with one or more dimensionally stable strip segments (33, 34, 35, 36, 37), presses and fixes the assembly part (11) by its assembly part edge (13) against the contact area (7) of the component (4) by means of an infeed device (32) supported on the floating frame (25).

20. Method according to Claim 19, **characterized in that** the assembly part (11) is permanently deformed while being assembled and pressed on.

21. Method according to Claim 19 or 20, **characterized in that** the assembly part (11) is connected in a form-fitting manner by way of its assembly part edge (13) to a concave seat (10) of the contact area (7).

22. Method according to Claim 19 or 20, **characterized in that** the assembly part (11) is placed by way of its assembly part edge (13) against a planar or curved contact surface (8) of the contact area (7).

23. Method according to Claim 19 or 20, **characterized in that** the assembly part (11) is placed by way of its assembly part edge (13) against a contact step (9) of the contact area (7).

24. Method according to one of the preceding claims, **characterized in that**, prior to the assembly operation, the assembly part (11) is elastically deformed to form an arch (12).

25. Method according to one of the preceding claims, **characterized in that** the assembly part (11) is fixed by laser brazing, laser welding or adhesive bonding.

26. Method according to one of the preceding claims, **characterized in that**, prior to being fixed on the assembly gripper (2), the assembly part (11) is centred in relation to the components (4) or to a network reference.

## Revendications

1. Dispositif d'assemblage pour l'assemblage de pièces à assembler (11), en particulier de tôles de toit, à des composants de carrosserie ou de superstructures de véhicule (3), avec une ou plusieurs pinces de serrage (2), se composant d'au moins un cadre (24) et un cadre flottant (25), plusieurs éléments de serrage (29, 30) et un élément de pression agissant sur la pièce à assembler (11), **caractérisé en ce que** la pince d'assemblage (2) comprend au moins une barrette de pression (27) adaptée au contour d'assemblage (6) du composant (4) avec un dispositif d'approche (32) appuyé sur le cadre flottant (25), dans lequel la barrette de pression (27) présente un support de barrette (26) relié au dispositif d'approche (32), sur lequel sont disposés un ou plusieurs segments de barrette de forme stable (33, 34, 35, 36, 37).

2. Dispositif d'assemblage selon la revendication 1, **caractérisé en ce que** les segments de barrette (33, 34, 35, 36, 37) sont montés sur le support de barrette (26), indépendamment l'un de l'autre avec une souplesse limitée dans la direction d'approche (41).

3. Dispositif d'assemblage selon la revendication 1 ou 2, **caractérisé en ce que** les segments de barrette (33, 34, 35, 36, 37) sont montés indépendamment l'un de l'autre avec une souplesse limitée autour d'un axe de pivotement (42) s'étendant transversalement à l'axe longitudinal de la barrette de pression (27).

4. Dispositif d'assemblage selon la revendication 1, 2 ou 3, **caractérisé en ce que** les segments de barrette (33, 34, 35, 36, 37) sont montés individuellement de manière élastique (39) sur le support de barrette (26).

5. Dispositif d'assemblage selon l'une quelconque des revendications précédentes, **caractérisé en ce que** les segments de barrette (33, 34, 35, 36, 37) sont réalisés en forme de pièces de forme (38) avec une face de pression (40) adaptée au contour d'assemblage (6).

6. Dispositif d'assemblage selon l'une quelconque des revendications précédentes, **caractérisé en ce que** la pince d'assemblage (2) comprend un corps de base (24) pouvant être relié à un dispositif d'alimentation (18) et un cadre flottant (25) monté avec une mobilité limitée sur celui-ci, dans lequel plusieurs éléments de serrage (29, 30) et au moins deux barrettes de pression latérales (27) avec leurs dispositifs d'approche (32) sont disposés sur le cadre flottant (25).

7. Dispositif d'assemblage selon l'une quelconque des revendications précédentes, **caractérisé en ce que** des doigts de cadre latéraux (31) destinés à coopérer avec les composants (4) sont disposés sur le cadre flottant (25).

8. Dispositif d'assemblage selon l'une quelconque des revendications précédentes, **caractérisé en ce que** les éléments de serrage (29, 30) sont montés avec une mobilité limitée dans la direction d'approche (41) et sont guidés latéralement.

9. Dispositif d'assemblage selon l'une quelconque des revendications précédentes, **caractérisé en ce que** les éléments de serrage (29, 30) sont réalisés en forme de pinces aspirantes avec des ventouses montées élastiquement.

10. Dispositif d'assemblage selon l'une quelconque des revendications précédentes, **caractérisé en ce que** les éléments de serrage (29, 30) sont disposés de façon répartie dans la région intérieure du cadre flottant (25) et sont entourés côté extérieur par les barrettes de pression (27), dans lequel les barrettes de pression (27) sont disposées avec une distance latérale par rapport au bord saillant (13) de la pièce à assembler.

11. Dispositif d'assemblage selon l'une quelconque des revendications précédentes, **caractérisé en ce que** les éléments de serrage situés à l'intérieur (30) présentent un réglage en hauteur (43).

12. Dispositif d'assemblage selon l'une quelconque des revendications précédentes, **caractérisé en ce que** les éléments de serrage intérieurs et extérieurs (29, 30) peuvent être actionnés séparément.

13. Dispositif d'assemblage selon l'une quelconque des revendications précédentes, **caractérisé en ce que** le dispositif d'assemblage (1) présente au moins un doigt mobile (17) pour la pièce à assembler (11).

14. Dispositif d'assemblage selon l'une quelconque des revendications précédentes, **caractérisé en ce que** les doigts (17) sont réalisés en forme d'appuis de centrage pour la pièce à assembler (11) et sont disposés de façon à pouvoir être approchés.

15. Dispositif d'assemblage selon l'une quelconque des revendications précédentes, **caractérisé en ce que** le dispositif d'assemblage (1) présente un dispositif de centrage (47) orienté vers le ou les composants (4).

16. Dispositif d'assemblage selon l'une quelconque des revendications précédentes, **caractérisé en ce que** le dispositif de centrage (47) présente plusieurs unités de centrage (48) applicables sur le contour d'assemblage (6), avec des pièces de centrage mobiles (58), qui peuvent être approchées en synchronisme contre la pièce à assembler (11) maintenue librement sur la pince d'assemblage (2).

17. Dispositif d'assemblage selon l'une quelconque des revendications précédentes, **caractérisé en ce que** le dispositif d'alimentation (18) pour la pince d'assemblage (2) est réalisé en forme de robot à plusieurs axes (19), dans lequel la pièce à assembler (11) peut être assemblée selon la géométrie existante du composant.

18. Dispositif d'assemblage selon l'une quelconque des revendications précédentes, **caractérisé en ce que** le dispositif d'alimentation (18) pour la pince d'assemblage (2) est réalisé en forme de chariot d'alimentation (20) guidé dans la direction d'approche (41), dans lequel la pièce à assembler (11) peut être assemblée selon une référence maillée de la carrosserie (3).

19. Procédé d'assemblage de pièces à assembler (11), en particulier de tôles de toit, à des composants (4) de carrosseries ou de superstructures de véhicule (3), avec une ou plusieurs pinces de serrage (2), se composant d'au moins un cadre (24), un cadre flottant (25), plusieurs éléments de serrage (29, 30) et un élément de pression agissant sur la pièce à assembler (11), **caractérisé en ce que** la pièce à assembler (11) est pressée et fixée avec son bord de pièce à assembler (13) sur la zone d'appui (7) du composant (4) au moyen d'un dispositif d'approche (32) appuyé sur le cadre flottant (25), à l'aide de la pince d'assemblage (2) avec au moins une barrette de pression (27) adaptée au contour d'assemblage (6) du composant (4) et se composant d'un support de barrette (26) avec un ou plusieurs segments de barrette de forme stable (33, 34, 35, 36, 37).

20. Procédé selon la revendication 19, **caractérisé en ce que** la pièce à assembler (11) subit une déformation permanente lors de l'assemblage et du pressage.

21. Procédé selon la revendication 19 ou 20, **caractérisé en ce que** la pièce à assembler (11) est assemblée en complémentarité de forme par son bord de pièce à assembler (13) avec un logement concave (10) de la zone d'appui (7).

22. Procédé selon la revendication 19 ou 20, **caractérisé en ce que** la pièce à assembler (11) est appliquée par son bord de pièce à assembler (13) sur une face d'appui plane ou courbe (8) de la zone d'appui (7).

23. Procédé selon la revendication 19 ou 20, **caractérisé en ce que** la pièce à assembler (11) est appliquée par son bord de pièce à assembler (13) sur un gradin d'appui (9) de la zone d'appui (7).

24. Procédé selon l'une quelconque des revendications précédentes, **caractérisé en ce que** la pièce à assembler (11) est déformée élastiquement avant l'assemblage en formant une courbure (12).

25. Procédé selon l'une quelconque des revendications précédentes, **caractérisé en ce que** la pièce à assembler (11) est fixée par brasage au laser, soudage au laser ou collage.

26. Procédé selon l'une quelconque des revendications précédentes, **caractérisé en ce que** la pièce à assembler (11) est centrée sur les composants (4) ou sur une référence maillée avant la fixation sur la pince d'assemblage (2).
